# EUROPEAN PATENT APPLICATION

(11) **EP 4 576 655 A1**
(43) Date of publication of application: **25.06.2025**
(21) Application number: 23219014.0
(22) Date of filing: 21.12.2023
(51) Int. Cl.: H04L 9/32, H04L 9/40, H04L 67/104

(54) **PEER-TO-PEER MESSAGING SYSTEM**

(71) Applicant: Hive Computing Services SA, 1201 Genève (CH)
(72) Inventor: CLERGET, Antoine, 1201 Genève (CH); ISMAIL, Amine, 06150 Cannes (FR)
(74) Representative: KATZAROV S.A.

(57) **Abstract**

The present invention relates to a computer implemented method for transmitting a message in a peer-to-peer messaging system between at least one emitter A and at least one receiver B through at least one intermediary user C, wherein said method comprises the steps of generating said message /(msg) at said one emitter A and encrypting said message with a receiver public key (recv_pubk) so as to generate a unique message identifier (msg_id), encapsulating said crypted message into an envelope (E) so as to generate a first cryptographic signatures (snd_sig) and its identifier (id), sending said envelope and storing it at said at least one intermediary user C participating in a distributed hash table (DHT) by using a distributed hash table put function, characterized in that when said at least intermediary user C stores said envelope, it uses a distributed sloppy hash table (DSHT) to announce himself as a provider for a specific key, and in that when the at least one receiver B connects, it looks in the DSHT for providers of said specific key and for each found intermediary user C as provider, requests him to send all the messages addressed to him.

## Description

### Technical Field

The present invention relates to a system and a method dedicated to content distribution, more particularly to a system and a method dedicated to file distribution and even more particularly to a system and a method dedicated to file distribution using peer-to-peer technology.

### Background

Peer-to-peer messaging systems already exist, they use either a traditional distributed hash table (DHT) protocol which is a decentralized storage system that provides lookup and storage schemes similar to a hash table, storing key-value pairs. It comprises several nodes each of which comprises a node responsible for keys along with the mapped values. Any node can efficiently retrieve the value associated with a given key. It therefore exposes two functions:
▪ A put(key, value): stores a value at the specified key, and
▪ A get(key) which returns the stored value, just as in a normal hash table. Only one value can be stored under a key at any given time

DHT protocols are well-suited for keys with a single writer and multiple readers. However, this is too limited since a messaging box usually requires multiple writers with a single reader.

Another protocol is the distributed sloppy hash table (DSHT) protocol which sacrifices the consistency of DHTs to support both frequent fetches and frequent stores of the same key. Thus, a sloppy insert can be seen as an append whereas a sloppy get only returns some randomized subset of the values stored under a given key.

The drawback with this protocol is that the get behavior of an SDHT is not appropriate for a messaging system since a receiver needs to receive all the messages and not only a subset.

Conventional systems and methods is available in https://www.researchqate.net/publication/4358830 An Experimental Peer-to-Peer E-mail System and show a peer-to-peer e-mail system in which messages are sent directly from senders to receivers using a "pull-based" approach. In such a system, the sender stores locally all messages intended to be sent, and notify their receivers using a global, distributed notification service. Receivers can then retrieve such notifications and decide if they want to receive the corresponding messages. If so, messages can be retrieved directly from their senders. The main drawback of this system however is that with this approach it is required that the sender and the receiver are both connected at the same time .

Another conventional system is described in http://flowingmail.com/ which shows a peer-to-peer e-mail system that utilizes the fact that a key is stored in the node whose id is the closest to that key to send messages from one node to another. To do so the sender appends a sequence of bytes that cause the ID of the message to be similar to the ID of the recipient, then stores the message in a DHT. This operation is computationally intensive and is used as "proof of work". Moreover, each node tries to decrypt all the messages that it receives and stores, but it will manage to decrypt only the messages encrypted using its public key. This operation is also computationally intensive.

From the above, it appears that standard messaging systems such as email and chat systems rely on central servers for the authentication of the sender, the authentication of the receiver, the storage of the messages while the receiver is offline. the protection against spams, and so on. A main drawback of these existing systems is therefore the necessity to relay their message in a central platform.

There is therefore a need for a system and a device permitting a user to asynchronously send a message to another user in a secure manner without relaying in a central platform.

### Summary

The present invention relates to a system and a method allowing parties to send/receive messages to/from each other in a secure manner without relying on a central authority.

A first aspect of the invention relates to a computer implemented method for transmitting a message in a peer-to-peer messaging system between at least one emitter A and at least one receiver B through at least one intermediary user C, wherein said method comprises the steps of generating said message /(msg) at said one emitter A and encrypting said message with a receiver public key (recv_pubk) so as to generate a unique message identifier (msg_id), encapsulating said crypted message into an envelope (E) so as to generate a first cryptographic signatures (snd_sig) and its identifier (id), sending said envelope and storing it at said at least one intermediary user C participating in a distributed hash table (DHT) by using a distributed hash table put function, characterized in that when said at least intermediary user C stores said envelope, it uses a distributed sloppy hash table (DSHT) to announce himself as a provider for a specific key, and in that when the at least one receiver B connects, it looks in the DSHT for providers of said specific key and for each found intermediary user C as provider, requests him to send all the messages addressed to him.

Preferably, the specific key is rk= g(recv_pubk) where g is a function that concatenates the receiver public key (recv_pubk) to any prefix such as g(recv_pubk) = "to/recv_pubk".

Advantageously, the specific key is sk= g'(snd_pubk) where g' is a function that concatenates a sender public key (snd_pubk) to any prefix such as g'(snd_pubk) = "from/snd_pubk".

According to a preferred embodiment, the first signature (snd_sig) is a signature of f(recv_pubk, msg_id, msg) using a sender private key (snd_privk), where f is a concatenation function.

Preferably, the DHT table is Kademlia.

Advantageously, the envelope can be stored on any intermediary user C participating in the DHT.

In a preferred manner, the envelope can be replicated on multiple intermediary users C participating in the DHT.

According to a preferred embodiment, before accepting to store said envelope, each intermediary user C carries out an encrypted data integrity validation process.

Preferably, envelope integrity validation process carries the steps of determining whether the id of the enveloppe is equal to H (snd_pubk, recv_pubk, msg_id), the first signature (snd_sig) is a valid signature by checking it against f(recv_pubk, msg_id, msg) and snd_pubk., and the second signature recv_sig is either empty or set to a valid signature of f'(snd_sig) using recv_privk.

Preferably, H is a cryptographic hash function such as sha256.

Advantageously, once the at least one receiver B retrieves said message, it validates the envelope E, extracts the message from E and decrypts it using the receiver private key (recv_privk)

In a preferred manner, once the receiver has decrypted said message, it generates a second cryptographic signatures (recv_sig), inserts it in the envelope E and sends back the updated envelope E to the DHT.

According to a preferred embodiment, the second signature (recv_sig) is a signature of f'(snd_sig) using a receiver private key (recv_privk), where f' is an identity function.

Preferably, once the receiver has sent back the updated envelope E to the DHT, at least one intermediary user C participating into the DHT validate the envelope E and If the second signature (recv_sig) is set to a valid signature, the envelope E is considered as received by the receiver R and can be deleted.

Advantageously, the intermediary user C asked to store E in the DHT carries out an anti-spam verification process comprising querying in the SDHT all the providers for the key sk=g'(snd_pubk), asking each provider to send the identifiers (id) of the envelopes E it stores and calculating the number of unique messages sent by each emitter and determining whether this number is higher than a certain threshold to consider it as a spammer.

### Detailed description

The present invention relates a Peer-to-peer messaging system using a mix of DHT and DSHT protocols. For this purpose, the method and the system extend the SDHT get function so that all the values associated with a key are fetched.

According to the present invention when an emitter wants to send a message to a receiver, he shall use the below described computer implemented method for transmitting a message in a peer-to-peer messaging system between at least one emitter A and at least one receiver B through at least one intermediary user C.

The method first comprises a step of preparing and sending the message on the emitter side. These steps comprise the steps of generating said message M at said emitter A and encrypting said message M with a receiver public key (recv_pubk) so as to generate a unique message identifier (M_id), encapsulating said crypted message into an envelope E so as to generate a first cryptographic signatures (snd_sig) and its identifier id.

Preferably, the envelope E is made of a set of fields including but not limited to a sender public key denoted snd_pubk, a receiver public key denoted recv_pubk, a message identifier denoted msg_id, a ciphered message denoted msg encrypted by the sender using the receiver public key, a cryptographic signature denoted snd_sig that corresponds to the signature of f(recv_pubk, msg_id, msg) using the sender private key denoted snd_privk. f could be the concatenation function and a cryptographic signature denoted recv_sig that corresponds to the signature of f'(snd_sig) using the receiver private key denoted recv_privk. f' could be the identity function.

Once the message is encapsulated, it is sent and stored at one or more intermediary user C, any possible intermediary user C, participating in a distributed hash table (DHT), preferably Kademlia, by using a distributed hash table put function. It is of course possible that the envelope is replicated on multiple intermediary users C participating in the DHT.

The index id of the enveloppe in the DHT is given by the output of any H function that takes as input snd_pubk, recv_pubk, msg_id, such that id = H(snd_pubk, recv_pubk, msg_id), where H is preferably a cryptographic hash function such as sha256.

However, before accepting to store said envelope, each intermediary user C preferably carries out an encrypted data integrity validation process.

In this process, it carries out the steps of determining whether the id of the enveloppe is equal to H (snd_pubk, recv_pubk, msg_id), if the first signature (snd_sig) is a valid signature by checking it against f(recv_pubk, msg_id, msg) and snd_pubk., and if the second signature recv_sig is either empty or set to a valid signature of f'(snd_sig) using recv_privk. Preferaby, the first signature (snd_sig) is a signature of f(recv_pubk, msg_id, msg) using a sender private key (snd_privk), where f is a concatenation function.

Particularly, when the intermediary user C stores said envelope, it uses a distributed sloppy hash table (DSHT) to announce himself as a provider for a specific key, and t when the at least one receiver B connects, it looks in the DSHT for providers of said specific key and for each found intermediary user C as provider, requests him to send all the messages addressed to him.

Preferably, the specific key is rk= g(recv_pubk) where g is a function that concatenates the receiver public key (recv_pubk) to any prefix such as g(recv_pubk) = "to/recv_pubk", or/and the specific key is sk= g'(snd_pubk) where g' is a function that concatenates a sender public key (snd_pubk) to any prefix such as g'(snd_pubk) = "from/snd_pubk".

When, the receiver B retrieves said message, it first validates the envelope E, extracts the message from E and decrypts it using the receiver private key (recv_privk). Then, it generates a second cryptographic signatures (recv_sig), inserts it in the envelope E and sends back the updated envelope E to the DHT and the intermediary user C participating into the DHT validate in turn the new envelope E and if the second cryptographic signature (recv_sig) is set to a valid signature, the envelope E is considered as received by the receiver R and can be deleted.

According to a preferred embodiment, the second cryptographic signature (recv_sig) is a signature of f'(snd_sig) using a receiver private key (recv_privk), where f' is an identity function.

Advantageously, the intermediary user C asked to store E in the DHT carries out an anti-spam verification process comprising querying in the SDHT all the providers for the key sk=g'(snd_pubk), asking each provider to send the identifiers (id) of the envelopes E it stores and calculating the number of unique messages sent by each emitter and determining whether this number is higher than a certain threshold to consider it as a spammer.

## Claims

1. Computer implemented method for transmitting a message in a peer-to-peer messaging system between at least one emitter A and at least one receiver B through at least one intermediary user C, wherein said method comprises the steps of
generating said message /(msg) at said one emitter A and encrypting said message with a receiver public key (recv_pubk) so as to generate a unique message identifier (msg_id),
encapsulating said crypted message into an envelope (E) so as to generate a first cryptographic signatures (snd_sig) and its identifier (id)
sending said envelope and storing it at said at least one intermediary user C participating in a distributed hash table (DHT) by using a distributed hash table put function,
**characterized in that** when said at least intermediary user C stores said envelope, it uses a distributed sloppy hash table (DSHT) to announce himself as a provider for a specific key, and **in that** when the at least one receiver B connects, it looks in the DSHT for providers of said specific key and for each found intermediary user C as provider, requests him to send all the messages addressed to him.

2. Method according to claim 1, **characterized in that** the specific key is rk= g(recv_pubk) where g is a function that concatenates the receiver public key (recv_pubk) to any prefix such as g(recv_pubk) = "to/recv_pubk".

3. Method according to claim 1, **characterized in that** the specific key is sk= g'(snd_pubk) where g' is a function that concatenates a sender public key (snd_pubk) to any prefix such as g'(snd_pubk) = "from/snd_pubk".

4. Method according to claim 1, **characterized in that** the first signature (snd_sig) is a signature off(recv_pubk, msg_id, msg) using a sender private key (snd_privk), where f is a concatenation function.

5. Method according to claim 1, **characterized in that** the DHT table is Kademlia.

6. Method according to claim 1, **characterized in that** said envelope can be stored on any intermediary user C participating in the DHT.

7. Method according to claim 1, **characterized in that** said envelope can be replicated on multiple intermediary users C participating in the DHT.

8. Method according to claim 1, **characterized in that** before accepting to store said envelope, each intermediary user C carries out an encrypted data integrity validation process.

9. Method according to claim 1, **characterized in that** said envelope integrity validation process carries the steps of determining whether
- the id of the enveloppe is equal to H (snd_pubk, recv_pubk, msg_id),
- the first signature (snd_sig) is a valid signature by checking it against f(recv_pubk, msg_id, msg) and snd_pubk., and
- the second signature recv_sig is either empty or set to a valid signature of f'(snd_sig) using recv_privk.

10. Method according to claim 1, **characterized in that** H is a cryptographic hash function such as sha256.

11. Method according to claim 1, **characterized in that** once the at least one receiver B retrieves said message, it validates the envelope E, extracts the message from E and decrypts it using the receiver private key (recv_privk).

12. Method according to claim 9, **characterized in that** once the receiver has decrypted said message, it generates a second cryptographic signatures (recv_sig), inserts it in the envelope E and sends back the updated envelope E to the DHT.

13. Method according to claim 10, **characterized in that** the second signature (recv_sig) is a signature of f'(snd_sig) using a receiver private key (recv_privk), where f' is an identity function.

14. Method according to claim 10, **characterized in that** once the receiver has sent back the updated envelope E to the DHT, at least one intermediary user C participating into the DHT validate the envelope E and If the second signature (recv_sig) is set to a valid signature, the envelope E is considered as received by the receiver R and can be deleted.

15. Method according to claim 1, **characterized in that** the intermediary user C asked to store E in the DHT carries out an anti-spam verification process comprising:
- querying in the SDHT all the providers for the key sk=g'(snd_pubk),
- asking each provider to send the identifiers (id) of the envelopes E it stores, and
- calculating the number of unique messages sent by each emitter and determining whether this number is higher than a certain threshold to consider it as a spammer.
